# EUROPEAN PATENT APPLICATION

(11) **EP 3 404 204 A1**
(43) Date of publication of application: **21.11.2018**
(21) Application number: 17171506.3
(22) Date of filing: 17.05.2017
(51) Int. Cl.: E21B 47/16, H04B 11/00

(54) **DOWNHOLE SURVEILLANCE SYSTEM**

(71) Applicant: Welltec A/S, 3450 Allerød (DK)
(72) Inventor: NESGAARD, Carsten, 3450 Allerød (DK)
(74) Representative: Hoffmann Dragsted A/S

(57) **Abstract**

The present invention relates to a downhole surveillance system (100) for communicating data from a sensor in an annulus between a well tubular metal structure and a borehole (20) measuring at least one condition of a hydrocarbon-containing reservoir to a tool in the well tubular metal structure, comprising a well tubular metal structure (1) having a wall (2), an inner face (3) and an outer face (4), a sensor unit (5) having a sensor (6) and a first transducer unit (7) arranged on the outer face, and a downhole tool (10) arranged in the well tubular metal structure and having a communication module (11) and a second transducer unit (12), the second transducer unit being configured to be arranged in abutment to the inner face, wherein each transducer unit comprises a transducer (14) and a transducer element (15), the transducer element is arranged between the transducer and the face of the well tubular metal structure and the transducer element has an inclined surface configured to position the transducer in an angle to the face of the well tubular metal structure for providing communication between the sensor and the tool through and along the wall. The present invention also relates to a method for surveillance.

## Description

The present invention relates to a downhole surveillance system for communicating data from a sensor in an annulus between a well tubular metal structure and a borehole. The present invention also relates to a method for surveillance.

Communication between a sensor outside a well tubular metal structure and a downhole tool in the well tubular metal structure is in the known system very difficult when the well tubular metal structure is made of metal. The known solution demands that the sender outside the well tubular metal structure is arranged very precisely opposite the receiver within the well tubular metal structure, and the receiver needs to be pressed against the inner face of the structure without any dirt therebetween in order to be able to receive any signals from the sender.

It is an object of the present invention to wholly or partly overcome the above disadvantages and drawbacks of the prior art. More specifically, it is an object to provide an improved downhole surveillance system in which communication between a sensor outside a well tubular metal structure and a downhole tool in the well tubular metal structure can occur even though the tool is not arranged directly opposite the sensor.

The above objects, together with numerous other objects, advantages and features, which will become evident from the below description, are accomplished by a solution in accordance with the present invention by a downhole surveillance system for communicating data from a sensor in an annulus between a well tubular metal structure and a borehole measuring at least one condition of a hydrocarbon-containing reservoir to a tool in the well tubular metal structure, comprising:
- a well tubular metal structure having a wall, an inner face and an outer face,
- a sensor unit having a sensor and a first transducer unit arranged on the outer face, and
- a downhole tool arranged in the well tubular metal structure and having a communication module and a second transducer unit, the second transducer unit being configured to be arranged in abutment to the inner face,
wherein each transducer unit comprises a transducer and a transducer element, the transducer element is arranged between the transducer and the face of the well tubular metal structure and the transducer element has an inclined surface configured to position the transducer in an angle to the face of the well tubular metal structure for providing communication between the sensor and the tool through and along the wall.

The system may comprise a plurality of sensor units.

Moreover, the transducer element may be a metal transducer element.

Also, the angle β may be the angle between an end face of the transducer facing the transducer element and the face of the well tubular metal structure.

Further, the transducer of the first transducer unit may be arranged at a distance from the transducer of the second transducer unit along the well tubular metal structure.

In addition, the transducer of the first transducer unit may face the transducer of the second transducer unit for enabling the first transducer unit and the second transducer unit to communicate with each other.

Furthermore, the transducers of the first transducer unit and the second transducer unit may be acoustic transducers.

Several first transducer units may be arranged on the outer face of the well tubular metal structure for receiving and/or transmitting signals and/or power from/to another first transducer unit.

Moreover, the downhole tool may comprise a projectable arm configured to bring the transducer of the second transducer unit into contact with the inner face of the well tubular metal structure.

Also, the transducer of the second transducer unit may be arranged in the arm.

Additionally, the second transducer unit may be arranged in a body of the tool.

Further, several first transducer units may be distributed on the outer face along a circumference of the well tubular metal structure.

In addition, the transducers of the two first transducer units may transmit towards each other over a distribution range being a distance between the two first transducer units.

Furthermore, the second transducer unit may be arranged opposite the transducer range.

The transducer of the first transducer unit may produce acoustic waves in a first direction and the transducer of the second transducer unit is arranged at a distance from the transducer of the first transducer unit in the first direction.

Moreover, the sensor may measure a condition, such as a temperature, a pressure, a water content or a fluid content.

Also, the sensor units may comprise a power supply receiving power from the second transducer unit.

Additionally, the sensor units may comprise a power supply configured to be at least partly recharged by acoustic waves produced by the transducer of another first transducer unit or of the second transducer unit.

Further, the angle may be between 60 and 90 degrees, preferably between 65 and 85 degrees.

Moreover, the transducers may produce shear waves and/or compression waves.

The transducers may produce more shear waves than compression waves or more compression waves than shear waves.

In addition, waves may propagate in the wall of the well tubular metal structure.

Also, waves may propagate in the wall of the well tubular metal structure at least between the first transducer unit and the second transducer unit.

Furthermore, the shear waves may be tangential shear waves.

In addition, the well may have a top and the inclined surface of the transducer element of the first transducer unit may face the top.

Hereby, the transducer element is protecting the sensor when the well tubular metal structure is introduced into the borehole.

Further, the first transducer unit may also comprise a housing for shielding the transducer and the element from bumps.

Said housing may be permeable.

Also, said housing may have openings.

The downhole surveillance system according to the present invention further comprises annular barriers, each having a tubular metal part mounted as part of the well tubular metal structure and an expandable metal sleeve surrounding the tubular metal part and being connected therewith by means of connection parts, and forming an expandable metal space between the tubular metal part and the expandable metal sleeve.

Moreover, the annular barrier may comprise a valve system configured to be in a first position to let fluid from an expansion opening in the tubular metal part into the expandable metal space and in a second position to allow fluid communication between the annulus and the expandable metal space.

Further, the sensor unit, the sensor and/or the transducer unit may be clamped to and/or around the well tubular metal structure. By clamping the sensor unit, the sensor and/or the transducer unit to and/or around the well tubular metal structure, the transducer unit, i.e. the transducer element, is brought to abut the outer face of the well tubular metal structure to establish better contact therebetween. The transducer element is thus brought in close contact with the well tubular metal structure to enhance the transfer of power/signal.

The present invention also relates to a method for surveillance comprising:
- arranging a plurality of sensor units on and along an outer face of a well tubular metal structure of a downhole surveillance system according to any of the preceding claims so that a first transducer unit of the sensor unit is configured to transmit waves in a first direction,
- arranging the well tubular metal structure in a borehole,
- arranging a tool in the well tubular metal structure at a distance from the first transducer unit along the first direction along the well tubular metal structure,
- performing a measurement with one of the sensors of one of the first transducer units,
- transmitting a signal along the well tubular metal structure, the signal being a representation of the measurement of the sensor, and
- receiving the signal by the second transducer unit of the downhole tool.

The system may comprise another first transducer unit transmitting in a second direction opposite the first direction, forming a distribution range, and the tool being arranged in the well tubular metal structure, so that the second transducer unit is arranged within the distribution range.

The method may further comprise mounting tubular metal parts of annular barriers as part of the well tubular metal structure.

The method for surveillance according to the present invention may further comprise pressurising the well tubular metal structure to expand the annular barriers.

One of the sensor units may be arranged between two annular barriers to measure a condition of the fluid in the zone isolated by the two annular barriers.

The invention and its many advantages will be described in more detail below with reference to the accompanying schematic drawings, which for the purpose of illustration show some non-limiting embodiments and in which
Fig. 1 shows a partly cross-sectional view of a downhole surveillance system,
Fig. 2 shows a partly cross-sectional view of another downhole surveillance system, and
Fig. 3 shows a partly cross-sectional view of part of another downhole surveillance system.

All the figures are highly schematic and not necessarily to scale, and they show only those parts which are necessary in order to elucidate the invention, other parts being omitted or merely suggested.

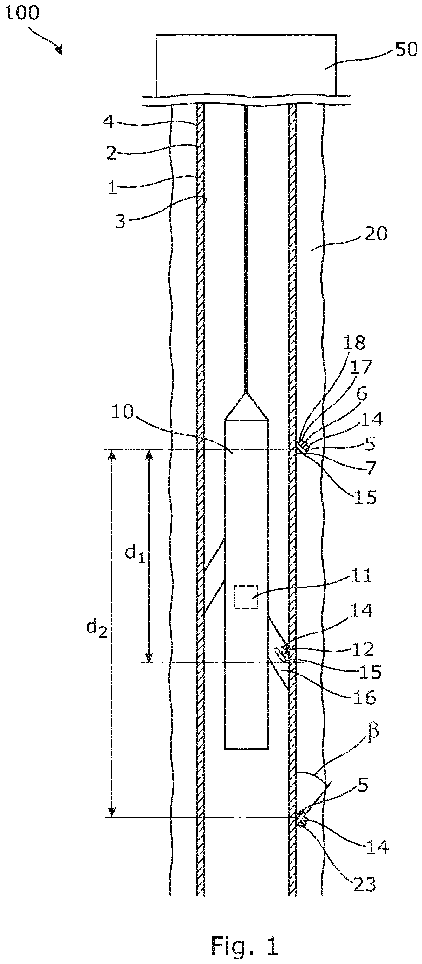

Fig. 1 shows a downhole surveillance system 100 for communicating data from a sensor in an annulus between a well tubular metal structure and a borehole 20. The sensor is configured to measure at least one condition of the fluid from a hydrocarbon-containing reservoir, such as a temperature, a pressure, a water content or a fluid content. The downhole surveillance system comprises a downhole tool arranged in the well tubular metal structure. The well tubular metal structure 1 has a wall 2, an inner face 3 and an outer face 4. Two sensor units 5 are arranged on the outer face and have a sensor 6 and a first transducer unit 7. The downhole tool 10 is arranged in the well tubular metal structure and has a communication module 11 and a second transducer unit 12. The second transducer unit is configured to be arranged in abutment to the inner face. Each transducer unit comprises a transducer 14 and a transducer element 15, and the transducer element is arranged between the transducer and the face of the well tubular metal structure. The transducer element 15 has an inclined surface 18 configured to position the transducer at an angle β to the face of the well tubular metal structure for providing communication between the sensor and the tool through and along the wall.

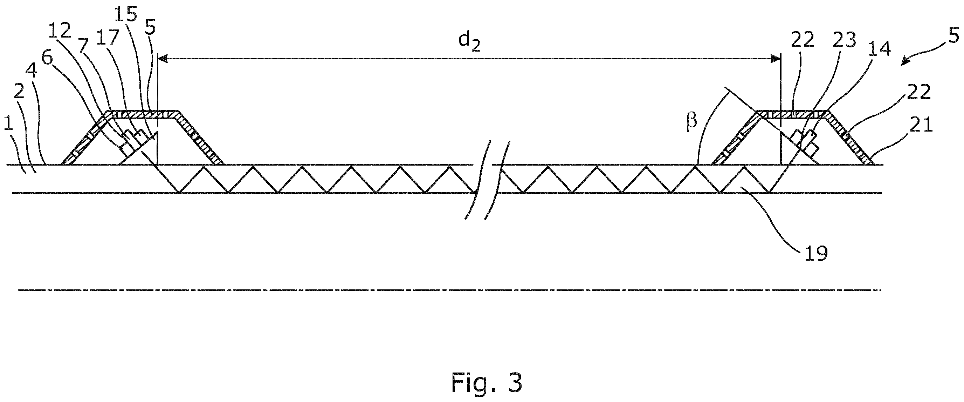

By having an inclining surface whereupon the transducer abuts, the transducer can transmit and receive signals and/or power through waves propagating in and along the wall of the well tubular metal structure between the transducer on the outside of the well tubular metal structure and the transducer on the inside of the well tubular metal structure. Thus, the transducer in the tool and the transducer in the sensor unit do not have to be positioned directly opposite each other as the waves propagate along the well tubular metal structure and not just straight through in a radial direction of the well tubular metal structure as the known solution. This is due to the fact that the signals are transmitted at the angle to the outer or inner face and propagate in a zigzag pattern 19, as shown in Fig. 3. The angle is between 60 and 90 degrees, preferably between 65 and 85 degrees. As shown in Fig. 1, the angle β is the angle between an end face 23 of the transducer 14 facing the transducer element 15 and the face of the well tubular metal structure. The transducer 14 of the first transducer unit 7 is arranged at a distance d₁ from the transducer 14 of the second transducer unit 12 along the well tubular metal structure. Furthermore, the transducer 14 of the first transducer unit 7 faces the transducer 14 of the second transducer unit 12. Hereby, the transducers transmit towards each other and the transducers do therefore not need to be positioned directly opposite each other for communicating with each other. The transducers of the first transducer unit and the second transducer unit are acoustic transducers.

By arranging the transducers at the angle β to the outer face of the well tubular metal structure, one first transducer unit may be arranged on the outer face of the well tubular metal structure for receiving and/or transmitting signals and/or power to another first transducer unit.

Thus, the transducers of two first transducer units transmit towards each other over a distribution range being a distance between the two first transducer units, and the second transducer unit may be arranged opposite the transducer range to receive or transmit signals/power between the transducers.

As can be seen in Fig. 3, the transducer 14 of the first transducer unit 7 produces acoustic waves in a first direction, and the transducer of the second first transducer unit is arranged at a distance d₂ from the first transducer unit in the first direction. In Fig. 1, the transducer of the first transducer unit produces acoustic waves in a first direction, and the transducer of the second transducer unit is arranged at a distance d₁ from the transducer of the first transducer unit in the first direction.

The sensor units of Fig. 1 comprise a power supply 17 receiving power from the second transducer unit. Thus, the power supply may be configured to be at least partly recharged by acoustic waves produced by the transducer of another first traducer unit or the second transducer unit.

The well of Fig. 1 has a top 50, and the inclined surface of the transducer element of the first transducer unit 7 nearest the top faces the top. Hereby, the transducer element is protecting the sensor when the well tubular metal structure is introduced into the borehole.

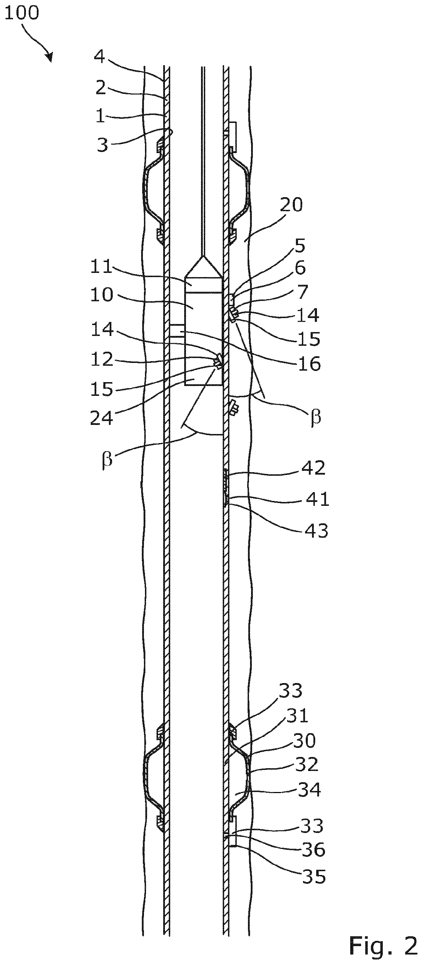

In Fig. 1, the downhole tool comprises a projectable arm 16 configured to bring the transducer 14 of the second transducer unit 12 into contact with the inner face 3 of the well tubular metal structure 1 and thus in communication with the transducer arranged on the outer face 4 of the well tubular metal structure. Thus, the transducer of the second transducer unit is arranged in the arm, and the transducer element 15 is arranged between the transducer in the arm and the inner face. As shown in Fig. 2, the second transducer unit may also be arranged in a body 24 of the tool, and the projectable arm 16 is arranged on the opposite side of the tool to move the body into abutment with the inner face and thus the transducer element into abutment with the inner face.

In another downhole surveillance system, several first transducer units are distributed on the outer face along a circumference of the well tubular metal structure.

The transducer element may be a metal transducer element. The metal of the transducer element may be impedance-matched to the metal of the well tubular metal structure.

The transducers produce waves propagating in the wall of the well tubular metal structure, and thus waves propagating in the wall of the well tubular metal structure at least between the first transducer unit and the second transducer unit. The transducers produce shear waves and/or compression waves. In one embodiment, the transducers produce more shear waves than compression waves or more compression waves than shear waves. The shear waves may be tangential shear waves.

As shown in Fig. 3, the first transducer unit comprises a housing 21 for shielding the transducer and the transducer element from bumps during insertion of the well tubular metal structure into the borehole. The housing has openings 22 for equalising the pressure within the housing with the pressure in the borehole during submersion.

In Fig. 2, the downhole surveillance system further comprises annular barriers 30. Each annular barrier has a tubular metal part 31 mounted as part of the well tubular metal structure and an expandable metal sleeve 32 surrounding the tubular metal part and being connected therewith by means of connection parts 33. An expandable metal space 34 is povided between the tubular metal part and the expandable metal sleeve. The tubular metal part has an expansion opening 36 for letting pressurised fluid in the expandable metal space 34 to expand the expandable metal sleeve. The annular barrier further comprises a valve system 35 configured to be in a first position to let fluid from an expansion opening 36 in the tubular metal part into the expandable metal space 34 and in a second position to allow fluid communication between the annulus and the expandable metal space 34.

The invention further relates to a surveillance method where a plurality of sensor units is arranged on and along an outer face of a well tubular metal structure of the downhole surveillance system, so that the first transducer unit of the sensor units is configured to transmit waves in a first direction. Then, the well tubular metal structure is arranged in a borehole, and a tool is arranged within the well tubular metal structure with the second transducer unit arranged at a distance from the first transducer unit along the first direction. The surveillance is performed in that a measurement is performed with the sensor of the first transducer unit, and a signal is transmitted from the first transducer unit along and in the wall of the well tubular metal structure. The signal is a representation of the measurement of the sensor. Then the signal is received by the second transducer unit of the downhole tool.

The downhole surveillance system may comprise two sensor units and these are arranged so that the first transducer units are configured to transmit waves towards each other over a distribution range being a distance between the two first transducer units. Then the well tubular metal structure is arranged in a borehole, and a tool is arranged within the well tubular metal structure with the second transducer unit arranged within the distribution range.

The method may further comprise the step of mounting tubular metal parts of annular barriers as part of the well tubular metal structure. One of the sensor units is arranged between two annular barriers to measure a condition of the fluid in the zone isolated by the two annular barriers. After installation of the well tubular metal structure in the borehole, the well tubular metal structure is pressurised to expand the annular barriers substantially simultaneously.

By fluid or well fluid is meant any kind of fluid that may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a casing or well tubular metal structure is meant any kind of pipe, tubing, tubular, liner, string etc. used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor®.

Although the invention has been described in the above in connection with preferred embodiments of the invention, it will be evident for a person skilled in the art that several modifications are conceivable without departing from the invention as defined by the following claims.

## Claims

1. A downhole surveillance system (100) for communicating data from a sensor in an annulus between a well tubular metal structure and a borehole (20) measuring at least one condition of a hydrocarbon-containing reservoir to a tool in the well tubular metal structure, comprising:
- a well tubular metal structure (1) having a wall (2), an inner face (3) and an outer face (4),
- a sensor unit (5) having a sensor (6) and a first transducer unit (7) arranged on the outer face, and
- a downhole tool (10) arranged in the well tubular metal structure and having a communication module (11) and a second transducer unit (12), the second transducer unit being configured to be arranged in abutment to the inner face, wherein each transducer unit comprises a transducer (14) and a transducer element (15), the transducer element is arranged between the transducer and the face of the well tubular metal structure and the transducer element has an inclined surface configured to position the transducer in an angle (β) to the face of the well tubular metal structure for providing communication between the sensor and the tool through and along the wall.

2. A downhole surveillance system according to claim 1, wherein the transducer of the first transducer unit is arranged at a distance (d₁) from the transducer of the second transducer unit along the well tubular metal structure.

3. A downhole surveillance system according to claim 1 or 2, wherein the transducer of the first transducer unit faces the transducer of the second transducer unit for enabling the transducers of the first transducer unit and the second transducer unit to communicate with each other.

4. A downhole surveillance system according to any of the preceding claims, wherein the downhole tool comprises a projectable arm (16) configured to bring the transducer of the second transducer unit into contact with the inner face of the well tubular metal structure.

5. A downhole surveillance system according to claim 4, wherein the transducer of the second transducer unit is arranged in the arm.

6. A downhole surveillance system according to any of the preceding claims, wherein several first transducer units are distributed on the outer face along a circumference of the well tubular metal structure.

7. A downhole surveillance system according to claim 6, wherein the transducers of the two first transducer units transmit towards each other over a distribution range being a distance between the two first transducer units.

8. A downhole surveillance system according to claim 7, wherein the second transducer unit is arranged opposite the transducer range.

9. A downhole surveillance system according to any of the preceding claims, wherein the transducer of the first transducer unit produces acoustic waves in a first direction and the transducer of the second transducer unit is arranged at a distance (d₁) from the transducer of the first transducer unit in the first direction.

10. A downhole surveillance system according to any of the preceding claims, wherein the sensor measures a condition, such as a temperature, a pressure, a water content or a fluid content.

11. A downhole surveillance system according to any of the preceding claims, wherein the sensor units comprise a power supply (17) receiving power from the second transducer.

12. A downhole surveillance system according to any of the preceding claims, wherein the angle is between 60 and 90 degrees, preferably between 65 and 85 degrees.

13. A downhole surveillance system according to any of the preceding claims, wherein the transducers produce more shear waves than compression waves or more compression waves than shear waves.

14. A downhole surveillance system according to any of the preceding claims, wherein waves propagate in the wall of the well tubular metal structure.

15. A method for surveillance comprising:
- arranging a plurality of sensor units on and along an outer face of a well tubular metal structure of a downhole surveillance system according to any of the preceding claims so that a first transducer unit of the sensor unit is configured to transmit waves in a first direction,
- arranging the well tubular metal structure in a borehole,
- arranging a tool in the well tubular metal structure at a distance from the first transducer unit along the first direction along the well tubular metal structure,
- performing a measurement with one of the sensors of one of the first transducer units,
- transmitting a signal along the well tubular metal structure, the signal being a representation of the measurement of the sensor, and
- receiving the signal by the second transducer unit of the downhole tool.
